# EUROPEAN PATENT SPECIFICATION

(11) **EP 2 811 801 B1**
(45) Date of publication and mention of the grant of the patent: **25.10.2017**
(21) Application number: 13743892.5
(22) Date of filing: 31.01.2013
(51) Int. Cl.: H04W 72/04, H04J 1/00, H04J 11/00, H04W 88/02, H04L 5/00, H04W 24/08, H04W 76/06, H04W 88/08

(54) **Mobile station performing carrier aggregation**
Mobilstation, die Aggregation von Trägerfrequenzen durchführt
Station mobile effectuant agrégation des fréquences porteuses

(30) Priority: 03.02.2012 JP 2012022552
(43) Date of publication of application: 10.12.2014
(73) Proprietor: NTT DOCOMO, INC., Chiyoda-ku Tokyo 100-6150 (JP)
(72) Inventor: UCHINO, Tooru, Tokyo 100-6150 (JP); UMESH, Anil, Tokyo 100-6150 (JP)
(74) Representative: Hoffmann Eitle
(86) International application number: PCT/JP2013/052193
(87) International publication number: WO 2013/115313

(56) References cited:
- INTEL CORPORATION: "Remaining open issues on timing and pathloss reference for sTAG", 31 January 2012 (2012-01-31), 3GPP DRAFT; R2-120264, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, XP050565350, [retrieved on 2012-01-31] * section 2 *
- INTEL CORPORATION: "Timing and pathloss reference for SCell to support MTA and inter-band CA", 3GPP DRAFT; R2-116271, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20111114 - 20111118, 8 November 2011 (2011-11-08), XP050564503, [retrieved on 2011-11-08]
- HUAWEI ET AL: "Timing Reference for SCell-only TA Group", 3GPP DRAFT; R2-115840 TIMING REFERENCE FOR SCELL-ONLY TA GROUP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20111114 - 20111118, 8 November 2011 (2011-11-08), XP050564327, [retrieved on 2011-11-08]
- SAMSUNG: "Discussions on timing reference for SCell(s) in sTAG", 3GPP DRAFT; R2-116067-TIMEREFERENCE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. San Francisco, USA; 20111114 - 20111118, 7 November 2011 (2011-11-07), XP050564229, [retrieved on 2011-11-07]
- PRAKASH BHAT ET AL: "LTE-advanced: an operator perspective", IEEE COMMUNICATIONS MAGAZINE, IEEE SERVICE CENTER, PISCATAWAY, US, vol. 50, no. 2, 1 February 2012 (2012-02-01), pages 104-114, XP011417046, ISSN: 0163-6804, DOI: 10.1109/MCOM.2012.6146489
- INTERDIGITAL COMMUNICATIONS: 'Timing, Pathloss Reference and RLM for SCells' 3GPP TSG-RAN WG2 #75BIS 14 October 2011, pages 1 - 2, XP050541074 Retrieved from the Internet: <URL:http:// www.3gpp.org/ftp/tsg_ran/WG2_RL2/TSGR2_75bi s/ Docs/R2-115410.zip>
- LG ELECTRONICS INC.: 'Resolving issues related to Radio Link Monitoring on SCells' 3GPP TSG- RAN WG2 #72 19 November 2010, pages 1 - 3, XP050605543 Retrieved from the Internet: <URL:http://www.3gpp.org/ftp/tsg_ran/WG2_RL 2/ TSGR2-72/Docs/R2-106573.zip>

## Description

### TECHNICAL FIELD

The present invention relates to a mobile station.

### BACKGROUND ART

For LTE (Long Term Evolution)-Advanced, "multiple Timing Advances (MTA)" has being examined which involves, when multiple CCs (Component Carrier) having different radio characteristics exist in CA (Carrier Aggregation), forming multiple groups each including CCs having substantially same radio characteristics, and applying a different "UL Timing Alignment Control" to each of the groups.

The groups include two types of groups, i.e., a pTAG (TA Group) including a Pcell (Primary Cell), and an sTAG including Scells only.

### PRIOR ART DOCUMENT

### NON-PATENT DOCUMENT

Non-patent document 1: 3GPP Contributed Article R2-116503

INTEL CORPORATION: "Remaining open issues on timing and pathloss reference for sTAG", 3GPP DRAFT; R2-120264, discusses time alignment between cells and discusses power loss over the path of a signal in a cell. In particular, it discusses a scenario in which multiple secondary cells for carrier aggregation form a time-aligned group, and a secondary cell with the lowest cell index in the group is used as the reference for time-alignment of the other cells in the group, for mobile station (UE) communications. As a result, a downlink (DL) connection from the selected reference cell to the UE provides the time-alignment reference.

INTEL CORPORATION: "Timing and pathloss reference for SCell to support MTA and inter-band CA", 3GPP DRAFT; R2-116271, similarly discusses time-aligned groups in the context of carrier aggregation, and describes a technical prejudice against using radio link monitoring for a secondary cell acting as a timing reference.

HUAWEI ET AL: "Timing Reference for SCell-only TA Group", 3GPP DRAFT; R2-115840 and SAMSUNG: "Discussions on timing reference for SCell(s) in sTAG", 3GPP DRAFT; R2-116067, also relate to choosing a cell in a group of secondary cells used in carrier aggregation, where the cell is to be used as a reference for time-alignment with the other cells of the group.

### SUMMARY OF THE INVENTION

Presently, in LTE-Advanced, a mobile station UE is configured to perform radio link monitoring (RLM) only in a Pcell even while performing CA.

Here, in "Intra-band CA," the radio characteristics in the Pcell and the Scell are same. Thus, if a RLF is not detected in the Pcell, a RLF is not presumably detected in the Scell either.

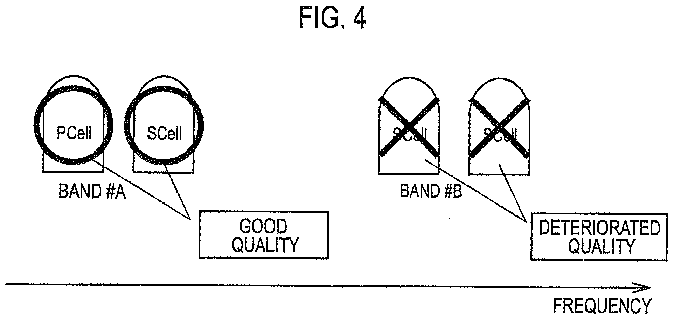

On the other hand, in "Inter-band CA," the radio characteristics may be different among TAGs. For this reason, when RLM is performed only in the Pcell, there may be a case where the quality of the Pcell and the Scell in a band #A (pTAG) is good, but the quality of the Scells in a band #B (sTAG) is deteriorated as shown in Fig. 4. This poses a problem that an uplink signal uncontrollable by a network may be transmitted in a Scell with the deteriorated quality.

The present invention has been made in view of the above-mentioned problem. An objective of the present invention is to provide a mobile station capable of controlling transmission of an uplink signal appropriately even when an "Inter-band CA" is performed.

The present invention provides a mobile station as set out in claim 1.

A first embodiment is summarized as a mobile station as set out in claim 1.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of a mobile station according to the first embodiment of the present invention.
[Fig. 3] Fig. 3 is a flowchart showing operations of the mobile station according to the first embodiment of the present invention.
[Fig. 4] Fig. 4 is a diagram illustrating a problem in a conventional mobile communication system.

### MODE FOR CARRYING OUT THE INVENTION

### (Mobile communication system according to first embodiment of the present invention)

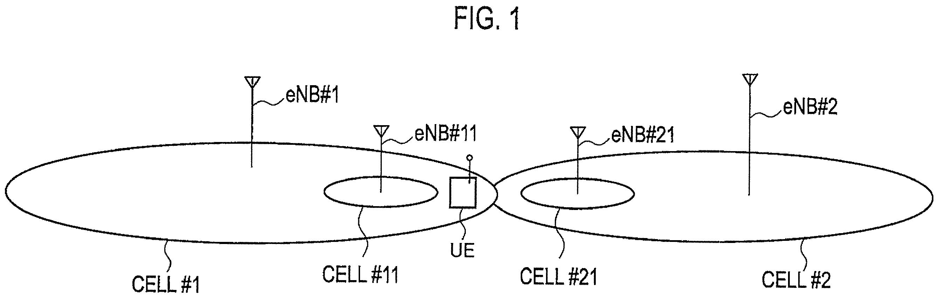

A mobile communication system according to a first embodiment of the present invention is described with reference to Fig. 1 to Fig. 3.

The mobile communication system according to this embodiment supports LTE-Advanced and is configured to be capable of performing CA by using a Pcell and Scells.

Specifically, the mobile communication system according to this embodiment is configured to be capable of performing at least one of "Intra-band CA" and "Inter-band CA".

As shown in Fig. 1, the mobile communication system according to this embodiment includes a radio base station eNB#1 configured to manage a cell #1, a radio base station eNB#2 configured to manage a cell #2, a radio base station eNB#11 configured to manage a cell #11, a radio base station eNB#21 configured to manage a cell #21, and the like.

For example, cells #1 and #2 may be cells using a coverage band supporting a wide area, for example, cells operated by carriers in a band #A (for example, macro cells).

On the other hand, cells #11 and #21 are disposed in areas covered by the cells #1 and #2, respectively, and may be cells each using a capacity band for improving the throughput in a hot spot, for example, cells operated by carriers in a band #B (for example, pico cells).

In this embodiment, the cell #1 may be set as the Pcell in the mobile station UE, and the cells #2, #11, and #21 may be set as the Scells in the mobile station UE.

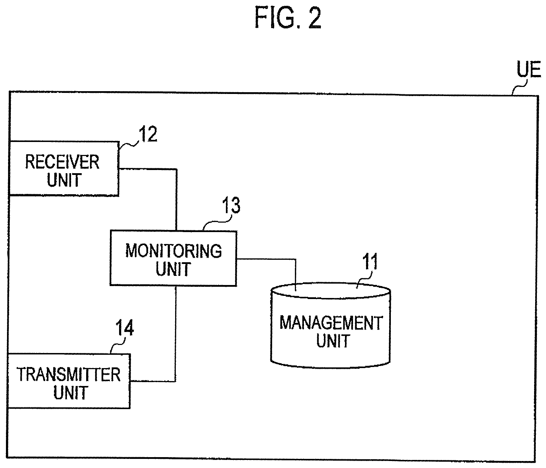

As shown in Fig. 2, the mobile station UE according to this embodiment includes a management unit 11, a receiver unit 12, a monitoring unit 13, and a transmitter unit 14.

The management unit 11 is configured to manage the statuses of respective Scells. Specifically, the management unit 11 is configured to manage whether each of Scells is "activated (in an active status)" or "deactivated (in a non-active status)".

Further, the management unit 11 is configured to manage individual uplink resources allocated to Scells.

Further, the management unit 11 is configured to manage a TAT (Timing Alignment Timer) that manages a time in which no occurrence of timing misalignment in an uplink is assured.

Here, the mobile station UE is configured to determine that timing misalignment in the uplink is occurring when the TAT is not running or expires.

The receiver unit 12 is configured to receive a downlink signal from the radio base station eNB, and the transmitter unit 14 is configured to transmit the uplink signal to the radio base station eNB.

The monitoring unit 13 is configured to select a predetermined number (for example, 1) of cells (Pcell or Scell) from each TAG, and monitor the radio link in the selected cell (Pcell/Scell).

In addition, for the sTAG, the monitoring unit 13 may be configured to limit cells to be monitored to Scells (included in a same TAG).

For example, the monitoring unit 13 may be configured to select the "Timing reference cell" as the one cell mentioned above and monitor the radio link in the cell.

Here, the "Timing reference cell" is a cell linked with SIB-2 (notification) in a cell in which the last random access procedure is performed in the sTAG, namely, "SIB-2 Linked Cell (DL)".

In addition, for the pTAG, the monitoring unit 13 may be configured to limit a cell to be monitored to the Pcell.

Further, the monitoring unit 13 may be configured to select a cell having the smallest SCellIndex in the sTAG as the one cell mentioned above and monitor the radio link in the cell.

Alternatively, the monitoring unit 13 may be configured to select a cell having the largest SCellIndex in the sTAG as the one cell mentioned above and monitor the radio link in the cell.

Further, the monitoring unit 13 may be configured to select a cell designated by the radio base station eNB as the one cell mentioned above and monitor the radio link in the cell.

Here, the monitoring unit 13 is configured to monitor the radio link in the Pcell, but not to monitor the radio link in any of the Scells in the pTAG.

Further, the monitoring unit 13 is configured to detect RLF (Radio Link Failure) when the downlink signal in the radio link is not detected for a predetermined time duration in a selected cell.

Here, the monitoring unit 13 may be configured to consecutively measure the predetermined time duration using a timer, to intermittently measure the predetermined time duration using a protection stage number, or to measure the predetermined time duration using both the timer and the protection stage number.

For example, when the monitoring unit 13 detects the RLF in a selected cell, the transmitter unit 14 may be configured to stop transmission of all uplink signals to all Scells in the sTAG in which a cell (Scell) having the detected RLF is contained.

Further, when the monitoring unit 13 detects the RLF in a selected cell, the management unit 11 may be configured to "deactivate" all Scells in the sTAG in which a cell (Scell) having the detected RLF is contained.

Alternatively, when the monitoring unit 13 detects the RLF in a selected cell, the management unit 11 may be configured to deconfigure all Scells in the sTAG in which a cell (Scell) having the detected RLF is contained.

Further, when the monitoring unit 13 detects the RLF in a selected cell, the management unit 11 may be configured to release individual uplink resources allocated to all Scells in the sTAG in which a cell (Scell) having the detected RLF is contained.

Further, when the monitoring unit 13 detects the RLF in a selected cell, the management unit 11 may be configured to stop a TAT managed for a TAG in which a cell (Scell) having the detected RLF is contained, and may be configured to regard the TAT as having expired.

Further, when the monitoring unit 13 detects the RLF in the Pcell, the transmitter unit 14 is configured to stop transmission of the uplink signal and perform the reconnection procedure.

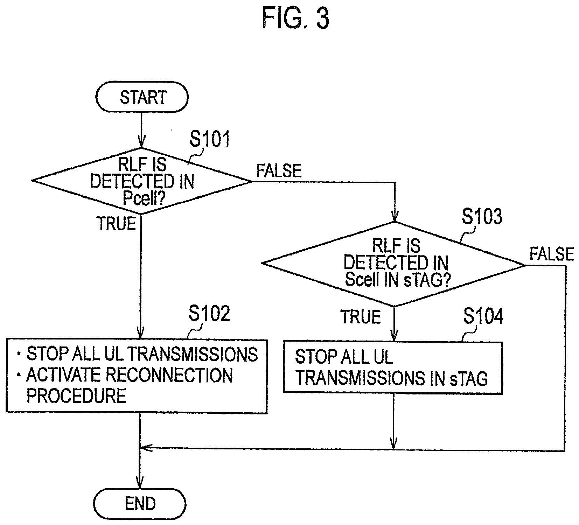

Hereinafter, operations of the mobile station UE according to this embodiment are described with reference to Fig. 3.

As shown in Fig. 3, the mobile station UE performs the RLM in the Pcell at step S101.

Here, when the mobile station UE detects a RLF in the Pcell, the operation proceeds to step S102. Otherwise, the operation proceeds to step S103.

At step S102, the mobile station UE stops transmission of all uplink signals and performs the reconnection procedure.

At step S103, the mobile station UE selects one cell (Scell) in the sTAG and performs the RLM in the selected cell.

Here, when the mobile station UE detects the RLF in the selected cell, the operation proceeds to step S104. Otherwise, the operation ends.

At step S104, the mobile station UE stops transmission of all uplink signals. In such a case, the mobile station UE may not perform the reconnection procedure as it is synchronized with the Pcell.

According to an aspect of this embodiment, the mobile station UE is configured to perform the RLM not only in the Pcell but also in one Scell per sTAG, such that the mobile station UE can control transmission of the uplink signal appropriately even when "Inter-band CA" is performed.

The features of this embodiment described above may be expressed as follows.

A first feature of this embodiment is summarized as a mobile station UE used in a mobile communication system configured to be capable of performing CA (Carrier Aggregation) by using a Pcell (Primary Cell) and Scells (Secondary Cells), the mobile station UE including a monitoring unit 13 configured to select a predetermined number of cells from each sTAG (group including Scells only), and to monitor radio links in the selected cells.

In the first feature of this embodiment, the monitoring unit 13 may be configured to select one cell as the predetermined number of cells.

In the first feature of this embodiment, the monitoring unit 13 may be configured to select a "Timing reference cell" as the one cell, and
the "Timing reference cell" is a cell linked with SIB-2 (notification) in a cell where a last random access procedure is performed in the sTAG.

In the first feature of this embodiment, the monitoring unit 13 may be configured to select a cell having the smallest SCellIndex (Index) in the sTAG as the one cell.

In the first feature of this embodiment, the monitoring unit 13 may be configured to select a cell having the largest SCellIndex in the sTAG as the one cell.

In the first feature of this embodiment, the monitoring unit 13 may be configured to select a cell designated by a radio base station UE as the one cell.

In the first feature of this embodiment, the monitoring unit 13 may be configured to detect RLF (Radio Link Failure) when a downlink signal is not detected in the radio link for a predetermined time duration.

In the first feature of this embodiment, the mobile station UE further includes a transmitter unit 14 configured to transmit an uplink signal, in which the transmitter unit 14 may be configured to stop transmission of the uplink signal when the monitoring unit 13 detects the RLF.

In the first feature of this embodiment, the mobile station UE further includes a management unit 11 configured to manage status of the Scells in the sTAG, in which the management unit 11 may be configured to "deactivate (in a non-active status)" all the Scells in the sTAG when the monitoring unit 13 detects the RLF.

In the first feature of this embodiment, the mobile station UE further includes a management unit 11 configured to manage status of the Scells in the sTAG, in which the management unit 11 may be configured to deconfigure all the Scells in the sTAG when the monitoring unit 13 detects the RLF.

In the first feature of this embodiment, the mobile station UE further includes a management unit 11 configured to manage individual uplink resources allocated to the Scells in the sTAG, in which the management unit 11 may be configured to release the individual uplink resources allocated to all the Scells in the sTAG when the monitoring unit 13 detects the RLF.

In the first feature of this embodiment, the mobile station UE further includes a management unit 11 configured to manage a TAT (Timer) configured to manage a time in which no occurrence of timing misalignment in an uplink is assured, in which the management unit 11 may be configured to stop the TAT when the monitoring unit 13 detects the RLF.

In the first feature of this embodiment, the mobile station UE further includes a management unit 11 configured to manage a TAT (timer) configured to manage a time in which no occurrence of timing misalignment in an uplink is assured, in which the management unit 11 regards the TAT as having expired when the monitoring unit 13 detects the RLF.

It should be noted that the foregoing operations of the mobile station UE and the radio base station eNB may be implemented by hardware, may be implemented by a software module executed by a processor, or may be implemented in combination of the two.

The software module may be provided in a storage medium in any format, such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or CD-ROM.

The storage medium is connected to a processor so that the processor can read and write information from and to the storage medium. Instead, the storage medium may be integrated in a processor. The storage medium and the processor may be provided inside an ASIC. Such an ASIC may be provided in the mobile station UE and the radio base station eNB. Otherwise, the storage medium and the processor may be provided as discrete components inside the mobile station UE and the radio base station eNB.

Hereinabove, the present invention has been described in detail by use of the foregoing embodiments. However, it is apparent to those skilled in the art that the present invention should not be limited to the embodiments described in the specification. The present invention can be implemented as an altered or modified embodiment without departing from the scope of the present invention. Therefore, the description of the specification is intended for illustrative explanation only and does not impose any limited interpretation on the present invention.

### INDUSTRIAL APPLICABILITY

As described above, the present invention provides a mobile station for controlling transmission of the uplink signal appropriately even when "Inter-band CA" is performed.

### EXPLANATION OF THE REFERENCE NUMERALS

- UE: mobile station
- eNB: radio base station
- 11: management unit
- 12: receiver unit
- 13: control unit
- 14: transmitter unit

## Claims

1. A mobile station (UE) for a mobile communication system configured to perform carrier aggregation by using a primary cell and secondary cells,
the mobile station (UE) comprising a monitoring unit (13) configured to select one cell from a group including secondary cells only, and to monitor radio links in the selected cell;
a management unit (11) configured to manage a timer configured to manage a time in which no occurrence of timing misalignment in an uplink is assured; and
a transmitter unit (14) configured to transmit an uplink signal, wherein
the monitoring unit (13) is configured to detect radio link failure when a downlink signal is not detected in the radio link for a predetermined time duration,
the management unit (11) is, when the monitoring unit (13) detects the radio link failure, either configured to regard the timer as having expired or configured to stop the timer, and
the transmitter unit (14) is configured to stop transmission of the uplink signal when the monitoring unit (13) detects the radio link failure.

2. The mobile station (UE) according to claim 1, wherein
the monitoring unit (13) is configured to select a timing reference cell as the one cell, and
the timing reference cell is a cell linked with notification in a cell where a last random access procedure is performed in the group.

3. The mobile station (UE) according to claim 1, wherein the monitoring unit (13) is configured to select a cell having the smallest index in the group as the one cell.

4. The mobile station (UE) according to claim 1, wherein the monitoring unit (13) is configured to select a cell having the largest index in the group as the one cell.

5. The mobile station (UE) according to claim 1, wherein the monitoring unit (13) is configured to select a cell designated by a radio base station as the one cell.

6. The mobile station (UE) according to claim 1, further comprising a management unit (11) configured to manage status of the secondary cells in the group,
wherein the management unit (11) is configured to deactivate all the secondary cells in the group when the monitoring unit (13) detects the radio link failure.

7. The mobile station (UE) according to claim 1, further comprising a management unit (11) configured to manage status of the secondary cells in the group,
wherein the management unit (11) is configured to deconfigure all the secondary cells in the group when the monitoring unit (13) detects the radio link failure.

8. The mobile station (UE) according to claim 1, further comprising a management unit (11) configured to manage individual uplink resources allocated to the secondary cells in the group,
wherein the management unit (11) is configured to release the individual uplink resources allocated to all the secondary cells in the group when the monitoring unit (13) detects the radio link failure.

## Patentansprüche

1. Mobilstation (UE) für ein Mobilkommunikationssystem, das konfiguriert ist, um Trägeraggregation unter Verwendung einer Primärzelle und Sekundärzellen durchzuführen,
wobei die Mobilstation (UE) umfasst eine Überwachungseinheit (13), die konfiguriert ist, um eine Zelle aus einer Gruppe, die nur Sekundärzellen aufweist, auszuwählen und um Funkverknüpfungen in der ausgewählten Zelle zu überwachen;
eine Verwaltungseinheit (11), die konfiguriert ist, um einen Zeitgeber zu verwalten, der zum Verwalten einer Zeit, in der kein Auftreten von Timing-Fehlausrichtung in einem Uplink gewährleistet ist, konfiguriert ist; und
eine Übertragungseinheit (14), die konfiguriert ist, um ein Uplink-Signal zu übertragen, wobei
die Überwachungseinheit (13) konfiguriert ist, um Funkverknüpfungsfehler zu erfassen, wenn ein Downlink-Signal in der Funkverknüpfung für eine vorbestimmte Zeitdauer nicht erfasst wird,
die Verwaltungseinheit (11), wenn die Überwachungseinheit (13) Funkverknüpfungsfehler erfasst, entweder konfiguriert ist, um den Zeitgeber als abgelaufen zu betrachten, oder konfiguriert ist, um den Zeitgeber zu stoppen, und
die Übertragungseinheit (14) konfiguriert ist, die Übertragung des Uplink-Signals zu stoppen, wenn die Überwachungseinheit (13) den Funkverknüpfungsfehler erfasst.

2. Mobilstation (UE) nach Anspruch 1, wobei
die Überwachungseinheit (13) konfiguriert ist, um eine Timing-Referenzzelle als die eine Zelle auszuwählen, und
die Timing-Referenzzelle eine Zelle ist, die mit einer Benachrichtigung in einer Zelle verbunden ist, in der eine letzte Direktzugriffsprozedur in der Gruppe durchgeführt wird.

3. Mobilstation (UE) nach Anspruch 1, wobei die Überwachungseinheit (13) konfiguriert ist, um eine Zelle, die den kleinsten Index in der Gruppe hat, als die eine Zelle auszuwählen.

4. Mobilstation (UE) nach Anspruch 1, wobei die Überwachungseinheit (13) konfiguriert ist, um eine Zelle, die den größten Index in der Gruppe hat, als die eine Zelle auszuwählen.

5. Mobilstation (UE) nach Anspruch 1, wobei die Überwachungseinheit (13) konfiguriert ist, um eine Zelle, die von einer Funkbasisstation bestimmt wird, als die eine Zelle auszuwählen.

6. Mobilstation (UE) nach Anspruch 1, weiter umfassend eine Verwaltungseinheit (11), die konfiguriert ist, um einen Status der Sekundärzellen in der Gruppe zu verwalten,
wobei die Verwaltungseinheit (11) konfiguriert ist, um alle Sekundärzellen in der Gruppe zu deaktivieren, wenn die Überwachungseinheit (13) Funkverknüpfungsfehler erfasst.

7. Mobilstation (UE) nach Anspruch 1, weiter umfassend eine Verwaltungseinheit (11), die konfiguriert ist, um einen Status der Sekundärzellen in der Gruppe zu verwalten,
wobei die Verwaltungseinheit (11) konfiguriert ist, um alle Sekundärzellen in der Gruppe zu dekonfigurieren, wenn die Überwachungseinheit (13) Funkverknüpfungsfehler erfasst.

8. Mobilstation (UE) nach Anspruch 1, weiter umfassend eine Verwaltungseinheit (11), die konfiguriert ist, um individuelle Uplink-Ressourcen, die den Sekundärzellen in der Gruppe zugewiesen sind, zu verwalten,
wobei die Verwaltungseinheit (11) konfiguriert ist, um die individuellen Uplink-Ressourcen, die allen Sekundärzellen in der Gruppe zugewiesen sind, freizusetzen, wenn die Überwachungseinheit (13) Funkverknüpfungsfehler erfasst.

## Revendications

1. Station mobile (UE) pour un système de communication mobile configurée pour réaliser une agrégation de porteuses en utilisant une cellule primaire et des cellules secondaires,
la station mobile (UE) comprenant une unité de surveillance (13) configurée pour sélectionner une certaine cellule dans un groupe incluant uniquement des cellules secondaires, et pour surveiller des liaisons radio dans la cellule sélectionnée ;
une unité de gestion (11) configurée pour gérer un minuteur configuré pour gérer un temps dans lequel aucune apparition de défaut d'alignement de synchronisation dans une liaison montante n'est assurée ; et
une unité émettrice (14) configurée pour émettre un signal de liaison montante, dans lequel
l'unité de surveillance (13) est configurée pour détecter un échec de liaison radio lorsqu'un signal de liaison descendante n'est pas détecté dans la liaison radio pour une durée de temps prédéterminée,
l'unité de gestion (11) est, lorsque l'unité de surveillance (13) détecte l'échec de liaison radio, soit configurée pour considérer le minuteur comme ayant expiré soit configurée pour arrêter le minuteur, et
l'unité émettrice (14) est configurée pour arrêter la transmission du signal de liaison montante lorsque l'unité de surveillance (13) détecte l'échec de liaison radio.

2. Station mobile (UE) selon la revendication1, dans laquelle
l'unité de surveillance (13) est configurée pour sélectionner une cellule de référence de synchronisation en tant que l'une cellule, et
la cellule de référence de synchronisation est une cellule liée avec une notification dans une cellule où une dernière procédure d'accès aléatoire est réalisée dans le groupe.

3. Station mobile (UE) selon la revendication 1, dans laquelle l'unité de surveillance (13) est configurée pour sélectionner une cellule ayant le plus petit indice dans le groupe en tant que la certaine cellule.

4. Station mobile (UE) selon la revendication 1, dans laquelle l'unité de surveillance (13) est configurée pour sélectionner une cellule ayant le plus grand indice dans le groupe en tant que la certaine cellule.

5. Station mobile (UE) selon la revendication 1, dans laquelle l'unité de surveillance (13) est configurée pour sélectionner une cellule désignée par une station de base radio en tant que la certaine cellule.

6. Station mobile (UE) selon la revendication 1, comprenant en outre une unité de gestion (11) configurée pour gérer le statut des cellules secondaires dans le groupe,
dans laquelle l'unité de gestion (11) est configurée pour désactiver toutes les cellules secondaires dans le groupe lorsque l'unité de surveillance (13) détecte l'échec de liaison radio.

7. Station mobile (UE) selon la revendication 1, comprenant en outre une unité de gestion (11) configurée pour gérer le statut des cellules secondaires dans le groupe,
dans laquelle l'unité de gestion (11) est configurée pour déconfigurer toutes les cellules secondaires dans le groupe lorsque l'unité de surveillance (13) détecte l'échec de liaison radio.

8. Station mobile (UE) selon la revendication 1, comprenant en outre une unité de gestion (11) configurée pour gérer des ressources de liaison montante individuelles allouées aux cellules secondaires dans le groupe,
dans laquelle l'unité de gestion (11) est configurée pour libérer les ressources de liaison montante individuelles allouées à toutes les cellules secondaires dans le groupe lorsque l'unité de surveillance (13) détecte l'échec de liaison radio.
